# EUROPEAN PATENT APPLICATION

(11) **EP 4 586 677 A1**
(43) Date of publication of application: **16.07.2025**
(21) Application number: 23870515.6
(22) Date of filing: 20.09.2023
(51) Int. Cl.: H04W 24/10, H04W 4/40

(54) **MEASUREMENT REPORT SENDING METHOD, COMMUNICATION APPARATUS, AND COMMUNICATION SYSTEM**

(30) Priority: 29.09.2022 CN 202211199867
(71) Applicant: Huawei Technologies Co., Ltd., Shenzhen, Guangdong 518129 (CN)
(72) Inventor: LI, Jie, Shenzhen, Guangdong 518129 (CN); PENG, Wenjie, Shenzhen, Guangdong 518129 (CN); HU, Xingxing, Shenzhen, Guangdong 518129 (CN)
(74) Representative: Pfenning, Meinig & Partner mbB
(86) International application number: PCT/CN2023/119961
(87) International publication number: WO 2024/067283

(57) **Abstract**

Embodiments of this application provide a measurement report sending method and an apparatus, so that a terminal device can send a measurement report in a timely manner when moving in a vertical direction. **In** this way, a radio link failure of the terminal device is avoided. The method includes: determining a first signal quality threshold based on a height of a terminal device; and sending a first measurement report when signal quality of a neighboring cell is higher than the first signal quality threshold, where the first measurement report includes signal quality information of the neighboring cell.

## Description

This application claims priority to Chinese Patent Application No. 202211199867.5, filed with the China National Intellectual Property Administration on September 29, 2022 and entitled "MEASUREMENT REPORT SENDING METHOD, COMMUNICATION APPARATUS, AND COMMUNICATION SYSTEM", which is incorporated herein by reference in its entirety.

### TECHNICAL FIELD

Embodiments of this application relate to the wireless communication field, and more specifically, to a measurement report sending method, a communication apparatus, and a communication system.

### BACKGROUND

With continuous development of aircraft technologies, more aircrafts are put into use. In a moving process of aircraft, a cellular network may provide wide coverage, high reliability, high security, and continuous mobility for the aircraft, and may provide a supervision function for a user. Because the aircraft generally flies above a network device, in a communication process between the aircraft and the network device, a radio signal may be transmitted between the aircraft and the network device without an obstacle, so that the aircraft can receive signals from more network devices. Existing mobility management technologies are mainly for movement of a terminal device on the ground in a direction parallel to the ground (that is, a horizontal direction). For example, when it is detected that signal quality of a serving cell is relatively poor, or when it is detected that signal quality of a neighboring cell is relatively good, the terminal device may perform signal quality measurement reporting, so that the network device obtains signal quality information of the neighboring cell, and then controls cell handover of the terminal device. However, the existing mobility management technologies have no specification for mobility in a direction perpendicular to the ground (that is, a vertical direction). As a result, when (for example, aircraft) moving in the vertical direction (for example, in a take-off, flight, or landing process), a terminal device may not perform signal quality measurement reporting in a timely manner. Consequently, a network device cannot control cell handover of the terminal device in a timely manner, and a radio link failure (radio link failure, RLF) of the terminal device is caused.

Therefore, how a terminal device sends a measurement report in a timely manner when moving in a vertical direction to avoid an RLF of the terminal device becomes an urgent problem to be resolved.

### SUMMARY

Embodiments of this application provide a measurement report sending method, a communication apparatus, and a communication system, so that a terminal device can send a measurement report in a timely manner when moving in a vertical direction. In this way, an RLF of the terminal device is avoided.

According to a first aspect, a measurement report sending method is provided. The method is performed by a terminal device or a module used in a terminal device. The method includes: determining a first signal quality threshold based on a height of the terminal device; and sending a first measurement report when signal quality of a neighboring cell is higher than the first signal quality threshold, where the first measurement report includes signal quality information of the neighboring cell.

In this embodiment of this application, the terminal device may determine a corresponding signal quality threshold based on the height of the terminal device when moving in a vertical direction. The terminal device may further report measurement of the signal quality of the neighboring cell in a timely manner based on the signal quality threshold, so that a network device can control cell handover of the terminal device in a timely manner. In this way, an RLF is avoided.

With reference to the first aspect, in some implementations of the first aspect, the determining a first signal quality threshold based on a height of the terminal device includes: receiving measurement configuration information from the network device, where the measurement configuration information indicates a second signal quality threshold; and determining the first signal quality threshold based on the height of the terminal device and the second signal quality threshold.

In this embodiment of this application, the terminal device may receive the second signal quality threshold configured by the network device, and may further adaptively determine, based on the second signal quality threshold, signal quality thresholds corresponding to different heights, to perform signal quality measurement reporting by using a signal quality threshold corresponding to a current height.

With reference to the first aspect, in some implementations of the first aspect, the determining a first signal quality threshold based on a height of the terminal device includes: receiving measurement configuration information from the network device, where the measurement configuration information indicates a correspondence between the height of the terminal device and the first signal quality threshold; and determining the first signal quality threshold based on the height of the terminal device and the correspondence.

With reference to the first aspect, in some implementations of the first aspect, the correspondence includes: When the height of the terminal device is greater than a first height threshold, the first signal quality threshold is a first value. Alternatively, the correspondence includes: When the height of the terminal device is less than or equal to a first height threshold, the first signal quality threshold is a second value.

In this embodiment of this application, space between the ground and the sky may be divided into two height intervals based on the first height threshold. The terminal device may perform signal quality measurement reporting by using the first value in an interval in which the height of the terminal device is greater than the first height threshold, or perform signal quality measurement reporting by using the second value in an interval in which the height of the terminal device is less than or equal to the first height threshold.

With reference to the first aspect, in some implementations of the first aspect, the correspondence includes: When the height of the terminal device belongs to a height interval R(i), the first signal quality threshold is a value T(i), and any height in the height interval R(i) is greater than a height threshold H(i) and less than or equal to a height threshold H(i+1), where i is a positive integer.

With reference to the first aspect, in some implementations of the first aspect, the correspondence further includes: When the height of the terminal device is greater than a height threshold H(N), the first signal quality threshold is a value T(N), where N is a positive integer greater than 1.

In this embodiment of this application, space between the ground and the sky may be divided into N height intervals based on N height thresholds. When the height of the terminal device is greater than the height threshold H(i) and less than or equal to the height threshold H(i+1), the terminal device may use the value T(i) to perform signal quality measurement reporting. Alternatively, when the height of the terminal device is greater than the height threshold H(N), the terminal device may use the value T(N) to perform signal quality measurement reporting.

With reference to the first aspect, in some implementations of the first aspect, the first measurement report further includes height information of the terminal device.

In this embodiment of this application, when reporting the signal quality information of the neighboring cell, the terminal device may further report the height of the terminal device to the network device, so that the network device determines a proper target cell or at least one candidate cell, and control cell handover of the terminal device.

According to a second aspect, a measurement report sending method is provided. The method is performed by a network device or a module used in a network device. The method includes: sending measurement configuration information to a terminal device, where the measurement configuration information indicates a correspondence between a height of the terminal device and a first signal quality threshold; and receiving a first measurement report, where the first measurement report includes signal quality information of a neighboring cell, and signal quality of the neighboring cell is higher than the first signal quality threshold. The method is a method on a network device side corresponding to the first aspect. Therefore, beneficial effects that can be achieved in the first aspect can also be achieved.

With reference to the second aspect, in some implementations of the second aspect, the correspondence includes: When the height of the terminal device is greater than a first height threshold, the first signal quality threshold is a first value. Alternatively, the correspondence includes: When the height of the terminal device is less than or equal to a first height threshold, the first signal quality threshold is a second value.

With reference to the second aspect, in some implementations of the second aspect, the correspondence includes: When the height of the terminal device belongs to a height interval R(i), the first signal quality threshold is a value T(i), and any height in the height interval R(i) is greater than a height threshold H(i) and less than or equal to a height threshold H(i+1), where i is a positive integer.

With reference to the second aspect, in some implementations of the second aspect, the correspondence further includes: When the height of the terminal device is greater than a height threshold H(N), the first signal quality threshold is a value T(N), where N is a positive integer greater than 1.

With reference to the second aspect, in some implementations of the second aspect, the first measurement report further includes height information of the terminal device.

According to a third aspect, a measurement report sending method is provided. The method is performed by a terminal device or a module used in a terminal device. The method includes: determining a first signal quality threshold, where the first signal quality threshold corresponds to a height of the terminal device; and sending a first measurement report when signal quality of a neighboring cell is higher than the first signal quality threshold, where the first measurement report includes signal quality information of the neighboring cell.

In this embodiment of this application, the terminal device may determine the signal quality threshold based on the height of the terminal device, or the terminal device may obtain the signal quality threshold via a network device, to perform signal quality measurement reporting based on the signal quality threshold. In this way, an RLF is avoided.

According to a fourth aspect, a communication apparatus is provided. The communication apparatus includes modules configured to perform the method according to any implementation of either the first aspect or the third aspect.

According to a fifth aspect, a communication apparatus is provided. The communication apparatus includes modules configured to perform the method according to any implementation of the second aspect.

According to a sixth aspect, a communication system is provided. The communication system includes the communication apparatus according to the fourth aspect and the communication apparatus according to the fifth aspect.

According to a seventh aspect, a communication apparatus is provided. The communication apparatus includes at least one processor and a communication interface. The communication interface is used by the communication apparatus to exchange information with another communication apparatus. When program instructions are executed in the at least one processor, the communication apparatus is enabled to perform the method according to any implementation of any one of the first aspect, the second aspect, or the third aspect.

According to an eighth aspect, a computer-readable medium is provided. The computer-readable medium stores program code to be executed by a device. When the program code is executed, the method according to any implementation of any one of the first aspect, the second aspect, or the third aspect is performed.

According to a ninth aspect, a computer program product including instructions is provided. When the computer program product runs on a computer, the computer is enabled to perform the method according to any implementation of any one of the first aspect, the second aspect, or the third aspect.

According to a tenth aspect, a chip is provided. The chip includes at least one processor. When program instructions are executed by the at least one processor, the chip is enabled to perform the method according to any implementation of any one of the first aspect, the second aspect, or the third aspect.

### BRIEF DESCRIPTION OF DRAWINGS

FIG. 1 is a diagram of an architecture of a communication system 100 to which an embodiment of this application is applied;
FIG. 2 is a schematic flowchart of a measurement report sending method according to an embodiment of this application;
FIG. 3 is a diagram of a structure of a communication apparatus according to an embodiment of this application; and
FIG. 4 is a diagram of a structure of another communication apparatus according to an embodiment of this application.

### DESCRIPTION OF EMBODIMENTS

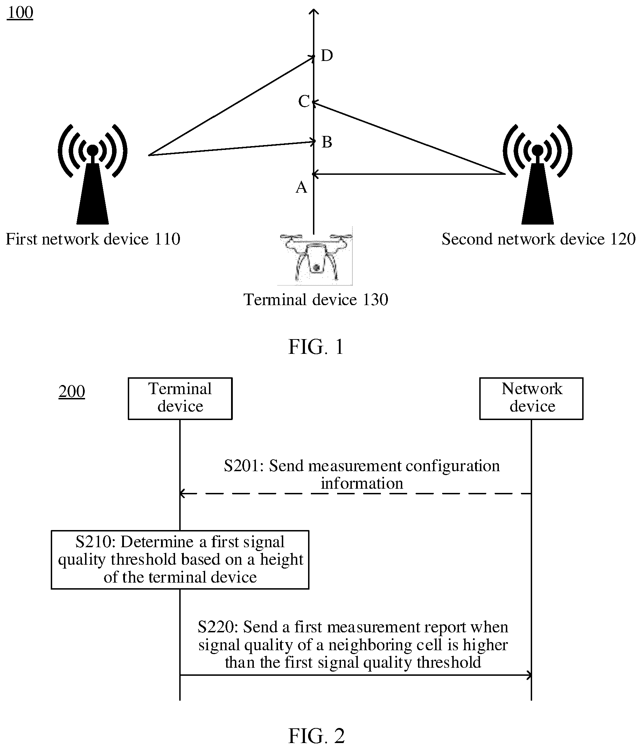

FIG. 1 is a diagram of an architecture of a communication system 100 to which an embodiment of this application is applied. As shown in FIG. 1, the communication system 100 may include a first network device 110, a second network device 120, and a terminal device 130. The first network device 110 and the second network device 120 may be radio access network devices.

The radio access network device is an access device used by a terminal to access the communication system in a wireless manner. The radio access network device may be a base station (base station), an evolved NodeB (evolved NodeB, eNodeB), a transmission reception point (transmission reception point, TRP), a next generation base station (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like. Alternatively, the radio access network device may be a module or a unit that completes some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to related technical specifications in the 3rd generation partnership project (3rd generation partnership project, 3GPP). The radio access network device may be a macro base station, may be a micro base station or an indoor base station, or may be a relay node, a donor node, or the like. A specific technology and a specific device form that are used by the radio access network device are not limited in embodiments of this application. For ease of description, the following provides descriptions by using an example in which the radio access network device is a base station.

The terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart wearable, smart transportation, and a smart city. The terminal may be a mobile phone, a tablet computer, a computer with a wireless transceiver function, a wearable device, aircraft, an uncrewed aerial vehicle (Unmanned Aerial Vehicle, UAV), a helicopter, an airplane, a robot, a mechanical arm, or the like. A specific technology and a specific device form that are used by the terminal are not limited in embodiments of this application.

The base station and the terminal may be fixed or movable. The base station and the terminal may be deployed on land, or may be deployed on water, or may be deployed on an airplane, a balloon, or an artificial satellite. Application scenarios of the base station and the terminal are not limited in embodiments of this application.

Roles of the base station and the terminal may be relative. For example, the terminal device 130 in FIG. 1 may be configured as a mobile base station. For a terminal that accesses the first network device 110 or the second network device 120 via the terminal device 130, the terminal device 130 is a base station. However, for the first network device 110 or the second network device 120, the terminal device 130 is a terminal, in other words, the first network device 110 (or the second network device 120) communicates with the terminal device 130 by using a wireless air interface protocol. It is clear that the first network device 110 (or the second network device 120) may alternatively communicate with the terminal device 130 by using an interface protocol between base stations. In this case, the terminal device 130 is also a base station for the first network device 110 (or the second network device 120). Therefore, both the base station and the terminal may be collectively referred to as a communication apparatus. The first network device 110 and the second network device 120 in FIG. 1 each may be referred to as a communication apparatus having a function of the base station, and the terminal device 130 in FIG. 1 may be referred to as a communication apparatus having a function of the terminal.

Communication between the base station and the terminal, between the base stations, or between the terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, the function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

In embodiments of this application, the base station sends a downlink signal or downlink information to the terminal. The downlink information is carried on a downlink channel. The terminal sends an uplink signal or uplink information to the base station. The uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

The terminal device 130 may move on the ground, or may move in a direction parallel to the ground. Alternatively, the terminal device 130 may move between the ground and the sky, in other words, the terminal device 130 may move in a direction perpendicular to the ground. In other words, the terminal device 130 may move in a vertical direction.

As shown in FIG. 1, in a process in which the terminal device 130 moves from the ground to the sky, a flight path of the terminal device 130 may include a path point A, a path point B, a path point C, and a path point D. The terminal device 130 may receive a signal from the first network device 110 in a range from the path point B to the path point D. In other words, the path points B, C, and D are all in signal coverage of the first network device 110. Alternatively, quality of the signal received by the terminal device 130 from the first network device 110 in a range from the path point B to the path point D is relatively good. The terminal device 130 receives no signal from the first network device 110 at the path point A. In other words, the path point A is not in the coverage of the first network device 110. Alternatively, quality of the signal received by the terminal device 130 from the first network device 110 at the path point A is relatively poor. The terminal device 130 may receive a signal from the second network device 120 in a range from the path point A to the path point C. In other words, the path points A, B, and C are all in signal coverage of the second network device 120. Alternatively, quality of the signal received by the terminal device 130 from the second network device 120 in a range from the path point A to the path point C is relatively good. The terminal device receives no signal from the second network device 120 at the path point D. In other words, the path point D is not in the signal coverage of the second network device 120. Alternatively, quality of the signal received by the terminal device 130 from the second network device 120 at the path point D is relatively poor.

A communication environment of the terminal device 130 in the air is different from a communication environment of the terminal device 130 on the ground. When moving in the vertical direction, quality of signals received by the terminal device 130 may decrease sharply. In other words, quality of signals sent by the first network device 110 and the second network device 120 may change sharply in the vertical direction. For example, signal quality of the signal sent by the first network device 110 at the path point B is -40 decibel-milliwatts (decibel-milliwatts, dBm), and signal quality of the signal sent by the first network device 110 at the path point A is -80 dBm. Signal quality of the signal sent by the second network device 120 at the path point C is -50 dBm, and signal quality of the signal sent by the second network device 120 at the path point D is -90 dBm.

As shown in FIG. 1, in a process in which the terminal device 130 moves from the path point A to the path point D, the terminal device 130 may receive the signal from the second network device 120 in a range from the path point A to the path point B, in other words, the terminal device 130 may establish a connection to the second network device 120 in the range from the path point A to the path point B. Assuming that in a range from the path point B to the path point C, a difference between quality of the signal sent by the first network device 110 and quality of the signal sent by the second network device 120 is small, the terminal device 130 maintains the connection to the second network device 120 in the range from the path point B to the path point C, and does not perform handover. However, the terminal device 130 can only receive the signal from the first network device 110 in a range from the path point C to the path point D, or quality of the signal received by the terminal device 130 from the first network device 110 in a range from the path point C to the path point D is relatively good. In addition, because the terminal device 130 does not perform signal quality measurement reporting in a timely manner in the range from the path point B to the path point C, an RLF may occur on the terminal device 130 in a process from the path point C to the path point D.

It is considered that, when the terminal moves in the vertical direction, it may be difficult for the terminal device to perform signal quality measurement reporting in a timely manner. Consequently, the terminal device may not be able to perform serving cell handover in the moving process in a timely manner, and the RLF is caused. Embodiments of this application provide a measurement report sending method. According to the method, a terminal device can send a measurement report in a timely manner when moving in a vertical direction. In this way, an RLF of the terminal device is avoided.

FIG. 2 is a schematic flowchart of a measurement report sending method according to an embodiment of this application. The method in FIG. 2 may be performed by the terminal device and the network device in FIG. 1, or may be performed by modules used in the terminal device and the network device in FIG. 1. FIG. 2 includes the following process.

S210: The terminal device determines a first signal quality threshold based on a height of the terminal device. The first signal quality threshold is used to assist the terminal device in performing signal quality measurement reporting.

Optionally, the terminal device may determine the first signal quality threshold based on the height of the terminal device and measurement configuration information from the network device.

Before S210, the method shown in FIG. 2 may further include S201.

S201: The network device sends the measurement configuration information to the terminal device. Correspondingly, the terminal device may receive the measurement configuration information from the network device.

In some embodiments, the measurement configuration information indicates a second signal quality threshold. After receiving the second signal quality threshold, the terminal device may determine the first signal quality threshold based on the second signal quality threshold and the height of the terminal device.

In some other embodiments, the measurement configuration information indicates a correspondence between the height of the terminal device and the first signal quality threshold. Specifically, the correspondence between the height of the terminal device and the first signal quality threshold may include: When the height of the terminal device is greater than a first height threshold, the first signal quality threshold is a first value. Alternatively, the correspondence may include: When the height of the terminal device is less than or equal to a first height threshold, the first signal quality threshold is a second value. Alternatively, the correspondence between the height of the terminal device and the first signal quality threshold includes: When the height of the terminal device belongs to a height interval R(i), the first signal quality threshold is a value T(i). Any height in the height interval R(i) is greater than a height threshold H(i) and less than or equal to a height threshold H(i+1). i is a positive integer, and T(i), H(i), and H(i+1) are positive real numbers. The correspondence between the height of the terminal device and the first signal quality threshold may further include: When the height of the terminal device is greater than a height threshold H(N), the first signal quality threshold is a value T(N), where N is a positive integer greater than 1.

In some other embodiments, the measurement configuration information includes configuration information of a first measurement event. The configuration information of the first measurement event may indicate a correspondence between the height of the terminal device and the first signal quality threshold. For example, the configuration information of the first measurement event may indicate the terminal device to perform signal quality measurement reporting when the height of the terminal device is greater than a first height threshold and signal quality of a neighboring cell is higher than a first value. Alternatively, the configuration information of the first measurement event may indicate the terminal device to perform signal quality measurement reporting when the height of the terminal device is less than or equal to a first height threshold and signal quality of a neighboring cell is higher than a second value. Alternatively, the configuration information of the first measurement event may indicate the terminal device to perform signal quality measurement reporting when the height of the terminal device belongs to a height interval R(i) and signal quality of a neighboring cell is higher than a value T(i). Alternatively, the configuration information of the first measurement event may indicate the terminal device to perform signal quality measurement reporting when the height of the terminal device is greater than a height threshold H(N) and signal quality of a neighboring cell is higher than a value T(N).

Before S201, the method shown in FIG. 2 may further include S202 (not shown in the figure).

S202: The terminal device sends first information to the network device. Correspondingly, the network device receives the first information.

The first information may include at least one of the following: a speed, location information, or a flight path of the terminal device. The speed of the terminal device may be a current speed of the terminal device, or may be a preset speed or a preset speed range of the terminal device. The location information of the terminal device may be current location information or preset location information of the terminal device. For example, the location information of the terminal device may be positioning information of the terminal device in a global positioning system (global positioning system, GPS) or a beidou navigation satellite system (beidou navigation satellite system, BDS), cell-level location information (for example, identification information of a current serving cell of the terminal device), tracking area (tracking area, TA)-level location information (for example, identification information of a TA in which the terminal device is currently located), or the like. The flight path of the terminal device may be any one or more of a preset flight path, a current flight path, or waypoint (waypoint) information of the terminal device. The waypoint information includes location information of each waypoint in at least one waypoint in the flight path of the terminal device, and the location information of each waypoint may be, for example, positioning information of each waypoint in the GPS or the BDS.

After receiving the first information, the network device may determine the measurement configuration information based on the first information. Specifically, the network device may determine the measurement configuration information based on one or more of the speed, the location information, or the flight path of the terminal device in the first information.

In some embodiments, the network device may determine the second signal quality threshold based on the speed of the terminal device. Specifically, if the speed of the terminal device is high, the network device may determine that a value of the second signal quality threshold is small. If the speed of the terminal device is low, the network device may determine that a value of the second signal quality threshold is large. For example, assuming that the speed of the terminal device is v₁, the network device may determine that the second signal quality threshold is b₁. Assuming that the speed of the terminal device is v₂, the network device may determine that the second signal quality threshold is b₂. v₁ is less than v₂, and b₁ is greater than b₂.

In some embodiments, the network device may alternatively determine the second signal quality threshold based on a speed interval to which the speed of the terminal device belongs. Specifically, when the speed of the terminal device belongs to a speed interval W(j), the second signal quality threshold is a value B(j). Any speed in the speed interval W(j) is greater than a speed threshold V(j) and less than or equal to a speed threshold V(j+1). j is a positive integer, and B(j), V(j), and V(j+1) are positive real numbers. For example, assuming that the speed of the terminal device is v₁, and v₁ belongs to a speed interval W(1), the network device may determine that the second signal quality threshold is a value B(1). Any speed in the speed interval W(1) is greater than a speed threshold V(1) and less than or equal to a speed threshold V(2). Assuming that the speed of the terminal device is v₂, and v₂ belongs to a speed interval W(2), the network device may determine that the second signal quality threshold is a value B(2). Any speed in the speed interval W(2) is greater than the speed threshold V(2) and less than or equal to a speed threshold V(3). v₁ is less than v₂, and B(1) is greater than B(2). Alternatively, when the speed of the terminal device is greater than a speed threshold V(M), the second signal quality threshold is a value B(M). M is a positive integer greater than 1, and B(M) is a positive real number.

In some other embodiments, the network device may determine the correspondence between the height of the terminal device and the first signal quality threshold based on the speed of the terminal device. Specifically, if the speed of the terminal device is high, the network device may determine that a value of the first signal quality threshold is small when the height of the terminal device is greater than the first height threshold. If the speed of the terminal device is low, the network device may determine that a value of the first signal quality threshold is large when the height of the terminal device is greater than the first height threshold. Alternatively, if the speed of the terminal device is high, the network device may determine that a value of the first signal quality threshold is small when the height of the terminal device is greater than a second height threshold. The second height threshold is less than or equal to the first height threshold.

For example, assuming that the speed of the terminal device is v₁, the network device may determine that the first signal quality threshold is c₁ when the height of the terminal device is greater than h₁. Assuming that the speed of the terminal device is v₂, the network device may determine that the first signal quality threshold is c₂ when the height of the terminal device is greater than h₁. v₁ is less than v₂, and c₁ is greater than c₂. Alternatively, assuming that the speed of the terminal device is v₂, the network device may determine that the first signal quality threshold is c₂ when the height of the terminal device is greater than h₂. h₁ is greater than or equal to h₂.

For example, assuming that the speed of the terminal device is v₁, the network device may determine that the first signal quality threshold is c₃ when the height of the terminal device is less than or equal to h₁. Assuming that the speed of the terminal device is v₂, the network device may determine that the first signal quality threshold is c₄ when the height of the terminal device is less than or equal to h₁. c₃ is greater than c₄. Alternatively, assuming that the speed of the terminal device is v₂, the network device may determine that the first signal quality threshold is c₄ when the height of the terminal device is less than or equal to h₂.

For example, assuming that the speed of the terminal device is v₁, the network device may determine that the first signal quality threshold is the value T(i) when the height of the terminal device belongs to the height interval R(i). Assuming that the speed of the terminal device is v₂, the network device may determine that the first signal quality threshold is U(k) when the height of the terminal device belongs to a height interval S(k). Any height in the height interval S(k) is greater than a height threshold G(k) and less than or equal to a height threshold G(k+1). k is a positive integer, and U(k), G(k), and G(k+1) are positive real numbers. The height intervals R(i) and S(k) may be different or may be the same. That the height intervals R(i) and S(k) are different may include: Lowest heights in the height intervals R(i) and S(k) are different, and/or highest heights in the height intervals R(i) and S(k) are different. That the height intervals R(i) and S(k) are the same includes: Lowest heights in the height intervals R(i) and S(k) are the same, and highest heights in the height intervals R(i) and S(k) are the same. T(i) and U(k) may be different or may be the same. When the height intervals R(i) and S(k) are the same, if v₁ is less than v₂, the value T(i) is greater than U(k). Alternatively, if v₁ is less than v₂, and the value T(i) and U(k) are the same, the height intervals R(i) and S(k) may be different, and a highest height in the height interval R(i) is greater than a highest height in S(k).

In some embodiments, the network device may alternatively determine the correspondence between the height of the terminal device and the first signal quality threshold based on a speed interval to which the speed of the terminal device belongs. A specific determining manner is similar to a manner of determining the correspondence between the height of the terminal device and the first signal quality threshold based on the speed of the terminal device. Details are not described herein again.

In some other embodiments, the network device may determine the second signal quality threshold based on the location information of the terminal device. For example, assuming that the location information of the terminal device indicates that a location of the terminal is a location point A, the network device may determine that the second signal quality threshold is b₃. Assuming that the location information of the terminal device indicates that a location of the terminal is a location point B, the network device may determine that a second signal quality range is b₄. b₃ and b₄ are different. The location point A and the location point B may be different positioning points in the GPS or the BDS, or the location point A and the location point B belong to different cells, or the location point A and the location point B are in different TAs.

In some other embodiments, the network device may determine the correspondence between the height of the terminal device and the first signal quality threshold based on the location information of the terminal device.

For example, assuming that the location information of the terminal device indicates that a location of the terminal is a location point A, the network device may determine that the first signal quality threshold is c₅ when the height of the terminal device is greater than a height threshold h₃. Assuming that the location information of the terminal device indicates that a location of the terminal is a location point B, the network device may determine that the first signal quality threshold is c₆ when the height of the terminal device is greater than a height threshold h₄. h₃ and h₄ may be different or may be the same. c₅ and c₆ may be different or may be the same.

For example, assuming that the location information of the terminal device indicates that a location of the terminal is a location point A, the network device may determine that the first signal quality threshold is c₇ when the height of the terminal device is less than or equal to a height threshold h₃. Assuming that the location information of the terminal device indicates that a location of the terminal is a location point B, the network device may determine that the first signal quality threshold is c₇ when the height of the terminal device is less than or equal to a height threshold h₄. h₃ and h₄ may be different or may be the same. c₇ and c₈ may be different or may be the same.

For example, assuming that the location information of the terminal device indicates that a location of the terminal is a location point A, the network device may determine that the first signal quality threshold is the value T(i) when the height of the terminal device belongs to the height interval R(i). Assuming that the location information of the terminal device indicates that a location of the terminal is a location point B, the network device may determine that the first signal quality threshold is a value U(k) when the height of the terminal device belongs to a height interval S(k).

For example, assuming that the location information of the terminal device indicates that a location of the terminal is a location point A, the network device may determine that the first signal quality threshold is the value T(N) when the height of the terminal device is greater than the height threshold H(N). Assuming that the location information of the terminal device indicates that a location of the terminal is a location point B, the network device may determine that the first signal quality threshold is a value U(K) when the height of the terminal device is greater than a height threshold G(K).

In some other embodiments, the network device may determine the second signal quality threshold based on the preset flight path or the current flight path of the terminal device. For example, it is assumed that the flight path of the terminal device includes a movement from a path point A to a path point B and a movement from the path point B to a path point C, where the path point A and the path point C are different path points. The network device determines, based on a path from the path point A to the path point B, that the second signal quality threshold is b₅. The network device determines, based on a path from the path point B to the path point C, that the second signal quality range is b₆. b₅ and b₆ are different. For a task-type uncrewed aerial vehicle that performs a specific task of patrolling high-voltage power cables, in a process of patrolling the high-voltage power cables, a flight path is preset, and a path point passed in a flight process is relatively fixed.

In some other embodiments, the network device may determine the correspondence between the height of the terminal device and the first signal quality threshold based on the preset flight path or the current flight path of the terminal device.

For example, it is assumed that the flight path of the terminal device includes a movement from a path point A to a path point B and a movement from the path point B to a path point C, where the path point A and the path point C are different path points. The network device determines, based on a path from the path point A to the path point B, that the first signal quality threshold is c₉ when the height of the terminal device is greater than a height threshold h₅. The network device determines, based on a path from the path point B to the path point C, that the first signal quality threshold is c₁₀ when the height of the terminal device is greater than a height threshold h₆. h₅ and h₆ may be different or may be the same. c₉ and c₁₀ may be different or may be the same.

For example, the network device determines, based on a path from the path point A to the path point B, that the first signal quality threshold is c₁₁ when the height of the terminal device is less than or equal to a height threshold h₅. The network device determines, based on a path from the path point B to the path point C, that the first signal quality threshold is c₁₂ when the height of the terminal device is less than or equal to a height threshold h₆. c₁₁ and c₁₂ may be different or may be the same.

For example, the network device determines, based on a path from the path point A to the path point B, that the first signal quality threshold is the value T(i) when the height of the terminal device belongs to the height interval R(i). The network device determines, based on a path from the path point B to the path point C, that the first signal quality threshold is a value U(k) when the height of the terminal device belongs to a height interval S(k).

For example, the network device determines, based on a path from the path point A to the path point B, that the first signal quality threshold is the value T(N) when the height of the terminal device is greater than the height threshold H(N). The network device determines, based on a path from the path point B to the path point C, that the first signal quality threshold is a value U(K) when the height of the terminal device is greater than a height threshold G(K).

In some other embodiments, the network device may determine the second signal quality threshold based on the waypoint information of the terminal device. For example, the network device may determine the second signal quality threshold based on positioning information of a first waypoint in the GPS. The first waypoint is any waypoint included in the waypoint information of the terminal device. When the location information of the terminal device is the positioning information of the terminal device in the GPS, a specific implementation of determining the second signal quality threshold based on the positioning information of the first waypoint in the GPS is similar to a manner of determining the second signal quality threshold based on the location information of the terminal device. Details are not described herein again.

In some other embodiments, the network device may determine the correspondence between the height of the terminal device and the first signal quality threshold based on the waypoint information of the terminal device. For example, the network device may determine the correspondence between the height of the terminal device and the first signal quality threshold based on positioning information of a first waypoint in the GPS. When the location information of the terminal device is the positioning information of the terminal device in the GPS, a specific implementation of determining the correspondence based on the positioning information of the first waypoint in the GPS is similar to a manner of determining the correspondence based on the location information of the terminal device. Details are not described herein again.

When the first information includes a plurality of items of the speed, the location information, or the flight path of the terminal device, the network device may determine the measurement configuration information based on the plurality of items of the speed, the location information, or the flight path of the terminal device.

For example, the network device may determine the second signal quality threshold based on the speed and the location information of the terminal device. Assuming that the speed of the terminal device is v₁, and a location of the terminal device is a location point A, the network device may determine that the second signal quality threshold is b₇. Assuming that the speed of the terminal device is v₂, and a location of the terminal device is a location point B, the network device may determine that the second signal quality threshold is b₈. The location point A and the location point B are different location points. b₇ and b₈ may be different or may be different.

For example, the network device may determine the second signal quality threshold based on the speed and the flight path of the terminal device. Assuming that the speed of the terminal device is v₁, and a location of the terminal device is a waypoint C, the network device may determine that the second signal quality threshold is b₉. Assuming that the speed of the terminal device is v₂, and a location of the terminal device is a waypoint D, the network device may determine that the second signal quality threshold is b₁₀. The waypoint C and the waypoint D are different flight points. b₉ and b₁₀ may be different or may be different.

For example, the network device may determine the second signal quality threshold based on the location information and the flight path of the terminal device. Assuming that a location of the terminal device is a location point A, and the location point A is located in a moving path from a path point E to a path point F, the network device may determine that the second signal quality threshold is b₁₁. Assuming that a location of the terminal device is a location point B, and the location point B is located in a moving path from a path point G to a path point H, the network device may determine that the second signal quality threshold is b₁₂. The moving path from the path point E to the path point F is different from the moving path from the path point G to the path point H. b₁₁ and b₁₂ may be different or may be different.

For example, the network device may determine the second signal quality threshold based on the speed, the location information, and the flight path of the terminal device. Assuming that the speed of the terminal device is v₁, a location of the terminal device is a location point A, and the location point A is located in a moving path from a path point E to a path point F, the network device may determine that the second signal quality threshold is b₁₃. Assuming that the speed of the terminal device is v₂, a location of the terminal device is a location point B, and the location point A is located in a moving path from a path point G to a path point H, the network device may determine that the second signal quality threshold is b₁₄. b₁₃ and b₁₄ may be different or may be different.

For example, the network device may determine the correspondence between the height of the terminal device and the first signal quality threshold based on the speed and the location information of the terminal device. Assuming that the speed of the terminal device is v₁, and a location of the terminal device is a location point A, the network device may determine that the first signal quality threshold is c₁₃ when the height of the terminal device is greater than h₇. Assuming that the speed of the terminal device is v₂, and a location of the terminal device is a location point B, the network device may determine that the first signal quality threshold is c₁₄ when the height of the terminal device is greater than h₈. h₇ and h₈ may be different or may be the same. c₁₃ and c₁₄ may be different or may be the same.

It should be understood that a specific implementation of determining, by the network device, the correspondence between the height of the terminal device and the first signal quality threshold based on the plurality of items of the speed, the location information, or the flight path of the terminal device is similar to a manner of determining the correspondence between the height of the terminal device and the first signal quality threshold based on the speed and the location information of the terminal device. Details are not described herein again.

In some embodiments, the measurement configuration information indicates one value of the second signal quality threshold. The value is irrelevant to the speed, the location information, and the flight path of the terminal device. Alternatively, the value corresponds to any one or more of the current speed, the current location information, or the current flight path of the terminal device. A correspondence between the value and any one or more of the current speed, the current location information, or the current flight path of the terminal device is related to content included in the first information. For example, when the first information includes the current speed of the terminal device, the network device determines a specific value of the second signal quality threshold based on the current speed of the terminal device, that is, the value corresponds to the current speed of the terminal device.

In some other embodiments, the measurement configuration information indicates a plurality of values of the second signal quality threshold. The plurality of values correspond to any one or more of different speeds, different location information, or different flight paths of the terminal device. The measurement configuration information may further indicate a correspondence between the plurality of values and any one or more of the different speeds, the different location information, or the different flight paths of the terminal device. For example, the measurement configuration information indicates a third value and a fourth value of the second signal quality threshold. The third value is a value determined by the network device based on a first speed, that is, the third value corresponds to the first speed. The fourth value is a value determined by the network device based on a second speed, that is, the fourth value corresponds to the second speed. The first speed and the second speed may be different preset speeds of the terminal device included in the first information. The measurement configuration information may further indicate that the third value corresponds to the first speed, and the fourth value corresponds to the second speed.

In some other embodiments, the measurement configuration information indicates one correspondence between the height of the terminal device and the first signal quality threshold. The correspondence is irrelevant to the speed, the location information, and the flight path of the terminal device. Alternatively, the correspondence corresponds to any one or more of the current speed, the current location information, or the current flight path of the terminal device. A correspondence between the correspondence and any one or more of the current speed, the current location information, or the current flight path of the terminal device is related to content included in the first information. For example, when the first information includes the current speed of the terminal device, the network device determines one correspondence between the height of the terminal device and the first signal quality threshold based on the current speed of the terminal device, that is, the correspondence corresponds to the current speed of the terminal device.

In some other embodiments, the measurement configuration information indicates a plurality of correspondences between the height of the terminal device and the first signal quality threshold. The plurality of correspondences correspond to any one or more of different speeds, different location information, or different flight paths of the terminal device. The measurement configuration information may further indicate a correspondence between the plurality of correspondences and any one or more of the different speeds, the different location information, or the different flight paths of the terminal device. For example, the measurement configuration information indicates a first correspondence and a second correspondence between the height of the terminal device and the first signal quality threshold. The first correspondence is a correspondence that is between the height of the terminal device and the first signal quality threshold and that is determined by the network device based on a first speed, that is, the first correspondence corresponds to the first speed. The second correspondence is a correspondence that is between the height of the terminal device and the first signal quality threshold and that is determined by the network device based on a second speed, that is, the second correspondence corresponds to the second speed. The first speed and the second speed may be different preset speeds of the terminal device included in the first information. The measurement configuration information may further indicate that the first correspondence corresponds to the first speed, and the second correspondence corresponds to the second speed.

When the measurement configuration information indicates one value of the second signal quality threshold, the terminal device may determine the first signal quality threshold based on the height of the terminal device and the second signal quality threshold. In some embodiments, the first signal quality threshold may be a ratio of the second signal quality threshold to the height.

For example, assuming that the second signal quality threshold is *x*₂ and the height of the terminal device is h, the first signal quality threshold *x*₁ may be *x*₁ *= α * x*₂ / *h. α* is a scaling factor, and a value of *α* is not specifically limited in this embodiment of this application. When the second signal quality threshold *x*₂ and the scaling factor *α* are fixed, if the height h of the terminal device is higher, the first signal quality threshold *x*₁ is lower, so that the terminal device can perform signal quality measurement reporting in a timely manner.

In some other embodiments, the first signal quality threshold may be a difference between a second signal quality threshold and a first parameter, where the first parameter is a ratio of the height of the terminal device to a second parameter. The first parameter and the second parameter are scaling factors.

For example, assuming that the height of the terminal device is h, and the second parameter is *β,* the second parameter may be *h*/*β.* Assuming that the second signal quality threshold is *x*₂, the first signal quality threshold *x*₁ may be *x*₁ = *x*₂ - *h* / *β* . A value of *β* is not specifically limited in this embodiment of this application. When the second signal quality threshold *x*₂ and the scaling factor *β* are fixed, if the height h of the terminal device is higher, the first signal quality threshold *x*₁ is lower, so that the terminal device can perform signal quality measurement reporting in a timely manner.

When the measurement configuration information indicates a plurality of values of the second signal quality threshold, and the plurality of values correspond to any one or more of different speeds, different location information, or different flight paths, the terminal device may determine a corresponding value of the second signal quality threshold based on any one or more of the current speed, the current location information, or the current flight path of the terminal device. The terminal device may further determine the first signal quality threshold based on the height of the terminal device and the second signal quality threshold. A specific implementation is similar to an implementation when the measurement configuration information indicates one value of the second signal quality threshold. Details are not described herein again.

When the measurement configuration information indicates one correspondence between the height of the terminal device and the first signal quality threshold, the terminal device may determine the first signal quality threshold based on the height of the terminal device and the correspondence. For example, when determining that the height of the terminal device is greater than the first height threshold, the terminal device may determine, based on the correspondence, that the first signal quality threshold is the first value. Alternatively, when determining that the height of the terminal device is less than or equal to the first height threshold, the terminal device may determine, based on the correspondence, that the first signal quality threshold is the second value. Alternatively, when determining that the height of the terminal device belongs to the height interval R(i), the terminal device may determine, based on the correspondence, that the first signal quality threshold is the value T(i). Alternatively, when determining that the height of the terminal device is greater than the height threshold H(N), the terminal device may determine, based on the correspondence, that the first signal quality threshold is the value T(N).

When the measurement configuration information indicates a plurality of correspondences between the height of the terminal device and the first signal quality threshold, and the plurality of correspondences correspond to any one or more of different speeds, different location information, or different flight paths of the terminal device, the terminal device may determine a corresponding correspondence between the height of the terminal device and the first signal quality threshold based on any one or more of the current speed, the current location information, or the current flight path of the terminal device. The terminal device may further determine the first signal quality threshold based on the height of the terminal device and the correspondence. A specific implementation is similar to that when the measurement configuration information indicates one correspondence. Details are not described herein again.

When the measurement configuration information includes the first measurement event, a specific manner in which the terminal device determines the first signal quality threshold is similar to an implementation when the measurement configuration information indicates one correspondence between the height of the terminal device and the first signal quality threshold. Details are not described herein again.

Optionally, the terminal device may determine the first signal quality threshold from preset first data based on the height of the terminal device. The preset first data includes one value of the second signal quality threshold. Alternatively, the preset first data includes one correspondence between the height of the terminal device and the first signal quality threshold.

Optionally, the terminal device may determine the first signal quality threshold from preset second data based on the height of the terminal device. The second data includes a correspondence between any one or more of at least one speed, at least one piece of location information, or at least one flight path and the second signal quality threshold. Alternatively, the second data includes at least one correspondence between any one or more of at least one speed, at least one piece of location information, or at least one flight path and the height of the terminal device and the first signal quality threshold.

Optionally, the terminal device may send the height of the terminal device to the network device, to obtain the measurement configuration information from the network device. The measurement configuration information indicates the first signal quality threshold. Correspondingly, after receiving the height from the terminal device, the network device may determine the corresponding first signal quality threshold based on the height of the terminal device. A specific determining manner is similar to a manner in which the terminal device determines the first signal quality threshold based on the height of the terminal device. Details are not described herein again. The network device may further indicate the first signal quality threshold to the terminal device by using the measurement configuration information. After receiving the measurement configuration information from the network device, the terminal device may further determine the first signal quality threshold based on the measurement configuration information. The first signal quality threshold corresponds to the height of the terminal device.

The terminal device may periodically perform step S210. Alternatively, the terminal device may perform step S210 when detecting that the height of the terminal device changes. Alternatively, the terminal device may perform step S210 only once when heights of the terminal device are in a same height range. In other words, the terminal device may perform step S210 once when detecting that the height of the terminal device changes from a first height range to a second height range. The first height range may be a height range less than or equal to the first height threshold, and the second height range may be a height range greater than the first height threshold. Alternatively, the first height range may be a height range greater than the first height threshold, and the second height range may be a height range less than or equal to the first height threshold. Alternatively, the first height range may be the height interval R(i), and the second height range may be a height interval R(i+1). Alternatively, the first height range may be a height interval R(i+1), and the second height range may be the height interval R(i). Alternatively, the first height range may be a height range greater than the height threshold H(N), and the second height range may be a height range less than or equal to the height threshold H(N). Alternatively, the first height range may be a height range less than or equal to the height threshold H(N), and the second height range may be a height range greater than the height threshold H(N).

S220: The terminal device sends a first measurement report when the signal quality of the neighboring cell is higher than the first signal quality threshold. Correspondingly, the network device may receive the first measurement report.

The first measurement report includes signal quality information of the neighboring cell, and the signal quality of the neighboring cell included in the first measurement report is higher than the first signal quality threshold. In other words, the first measurement report may include signal quality information of each neighboring cell of at least one neighboring cell. Signal quality of some or all neighboring cells in the at least one neighboring cell is higher than the first signal quality threshold.

The terminal device may continuously perform measurement on the signal quality of the neighboring cell, or periodically perform measurement on the signal quality of the neighboring cell. Alternatively, the terminal device may perform measurement on the signal quality of the neighboring cell when receiving measurement indication information. Alternatively, the terminal device may perform measurement on the signal quality of the neighboring cell when a measurement trigger condition is met. For example, the measurement trigger condition may be that the height of the terminal device is greater than a threshold, or may be that the terminal device reaches a preset location in the preset flight path, or the like.

After determining a specific value of the first signal quality threshold, the terminal device may send the first measurement report to the network device when detecting that the signal quality of the neighboring cell is higher than the first signal quality threshold. For example, after determining that the first signal quality threshold is the first value, the terminal device may send the first measurement report to the network device when the signal quality of the neighboring cell is higher than the first value. Alternatively, after determining that the first signal quality threshold is the second value, the terminal device may send the first measurement report to the network device when the signal quality of the neighboring cell is higher than the second value. Alternatively, after determining that the first signal quality threshold is the value T(i), the terminal device may send the first measurement report to the network device when the signal quality of the neighboring cell is higher than the value T(i). Alternatively, after determining that the first signal quality threshold is the value T(N), the terminal device may send the first measurement report to the network device when the signal quality of the neighboring cell is higher than the value T(N).

Optionally, the terminal device may perform step S220 once when detecting that the height of the terminal device changes from a first height range to a second height range. The first height range and the second height range are similar to the first height range and the second height range in step S210.

The first measurement report may further include height information of the terminal device. In other words, the network device may receive the height information of the terminal device. The first measurement report may further include the location information and/or lifting information of the terminal device. In other words, the network device may receive the location information and/or the lifting information of the terminal device. The lifting information indicates that the terminal device is moving from the ground to the sky, or the lifting information indicates that the terminal device is moving from the sky to the ground.

After sending the first measurement report to the network device, the terminal device may receive a radio resource control (radio resource control, RRC) configuration message from the network device. The RRC configuration message may include identification information of a target cell, and the RRC configuration message may further include air interface configuration information of the target cell. The target cell is a neighboring cell included in the first measurement report. The terminal device may establish a connection to the target cell. Alternatively, the RRC configuration message may include a handover condition and identification information of each candidate cell in a plurality of candidate cells. The RRC configuration message may further include air interface configuration information of each candidate cell, and the like. Each candidate cell is a neighboring cell included in the first measurement report. The handover condition may include a height threshold, or the handover condition may include a height threshold and a signal quality threshold. When the terminal device determines that the handover condition is met, the terminal device may use one candidate cell in the plurality of candidate cells as the target cell, and establish a connection to the target cell. For example, that the handover condition is met may be that the height of the terminal device is greater than the height threshold in the handover condition. For example, that the handover condition is met may further be that the height of the terminal device is greater than the height threshold in the handover condition, and the signal quality of the neighboring cell is higher than a signal quality threshold corresponding to the height threshold.

Optionally, the terminal device may send a second measurement report when signal quality of a serving cell is higher than the first signal quality threshold. The first signal quality threshold is the signal quality threshold determined according to step S210. The second measurement report includes the signal quality information of the neighboring cell. The network device may determine the target cell based on the second measurement report, to control cell handover of the terminal device.

Optionally, the terminal device may send a third measurement report when signal quality of a serving cell is lower than the first signal quality threshold. The first signal quality threshold is the signal quality threshold determined according to step S210. The third measurement report includes the signal quality information of the neighboring cell. The network device may determine the target cell based on the third measurement report, to control cell handover of the terminal device.

Optionally, the terminal device may send a fourth measurement report when a difference between the signal quality of the neighboring cell and signal quality of a serving cell is higher than the first signal quality threshold. The first signal quality threshold is the signal quality threshold determined according to step S210. The fourth measurement report includes the signal quality information of the neighboring cell, and the difference between the signal quality of the neighboring cell and the signal quality of the serving cell included in the fourth measurement report is greater than the first signal quality threshold. The network device may determine the target cell based on the fourth measurement report, to control cell handover of the terminal device.

Optionally, the terminal device may send a fifth measurement report when the signal quality of the neighboring cell is higher than the first signal quality threshold and signal quality of a serving cell is lower than a third signal quality threshold. The first signal quality threshold is the signal quality threshold determined according to step S210. The third signal quality threshold is a threshold corresponding to the first signal quality threshold, in other words, the third signal quality threshold is a threshold corresponding to the height of the terminal device. **In** other words, the terminal device may determine the third signal quality threshold based on the height of the terminal device. A manner in which the terminal device determines the third signal quality threshold based on the height of the terminal device is similar to that of step S210. Details are not described herein again. The fifth measurement report includes the signal quality information of the neighboring cell, the signal quality information of the neighboring cell included in the fifth measurement report is higher than the first signal quality threshold, and the signal quality of the serving cell is lower than the third signal quality threshold. The network device may determine the target cell based on the fifth measurement report, to control cell handover of the terminal device.

According to the measurement report sending method in this embodiment of this application, when the terminal device moves in a vertical direction, different signal quality thresholds can be determined based on the heights of the terminal device, so that the signal quality information of the neighboring cell is measured and reported in a timely manner. In this way, an RLF of the terminal device is avoided.

It may be understood that, to implement the functions in the foregoing embodiments, the terminal device and the network device include corresponding hardware structures and/or software modules for performing the functions. A person skilled in the art should be easily aware that, with reference to the units and the method steps in the examples described in embodiments disclosed in this application, this application may be implemented by hardware or a combination of hardware and computer software. Whether a function is performed by hardware or hardware driven by computer software depends on particular application scenarios and design constraint conditions of the technical solutions.

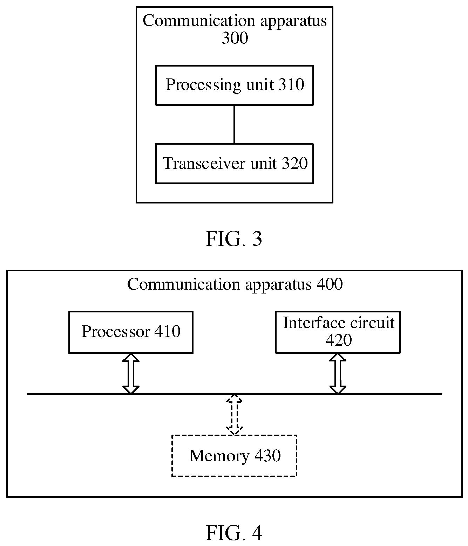

FIG. 3 and FIG. 4 are diagrams of structures of possible communication apparatuses according to embodiments of this application. The communication apparatuses may be configured to implement functions of the terminal device or the network device in the foregoing method embodiment, and therefore can also implement the beneficial effects in the foregoing method embodiment. In embodiments of this application, the communication apparatus may be the terminal device 130 shown in FIG. 1, or may be the first network device 110 or the second network device 120 shown in FIG. 1.

As shown in FIG. 3, a communication apparatus 300 includes a processing unit 310 and a transceiver unit 320. The communication apparatus 300 is configured to implement functions of the terminal device or the network device in the method embodiment shown in FIG. 2.

When the communication apparatus 300 is configured to implement the functions of the terminal device in the method embodiment shown in FIG. 2, the processing unit 310 is configured to determine a first signal quality threshold based on a height of the terminal device; and the transceiver unit 320 is configured to send a first measurement report when signal quality of a neighboring cell is higher than the first signal quality threshold. The first measurement report is similar to the first measurement report in FIG. 2. Details are not described herein again.

In some embodiments, when the communication apparatus 300 is configured to implement the functions of the terminal device in the method embodiment shown in FIG. 2, the transceiver unit 320 is further configured to receive measurement configuration information from a network device. The measurement configuration information is similar to the measurement configuration information in FIG. 2. Details are not described herein again.

In some embodiments, when the communication apparatus 300 is configured to implement the functions of the terminal device in the method embodiment shown in FIG. 2, the transceiver unit 320 is further configured to send first information to the network device. The first information is similar to the first information in FIG. 2. Details are not described herein again.

When the communication apparatus 300 is configured to implement the functions of the network device in the method embodiment shown in FIG. 2, the transceiver unit 320 is configured to send measurement configuration information to a terminal device, and the transceiver unit 320 is further configured to receive first measurement report. The measurement configuration information and the first measurement report are similar to the measurement configuration information and the first measurement report in FIG. 2. Details are not described herein again.

In some embodiments, when the communication apparatus 300 is configured to implement the functions of the network device in the method embodiment shown in FIG. 2, the transceiver unit 320 is further configured to receive first information. The first information is similar to the first information in FIG. 2. Details are not described herein again.

In some embodiments, when the communication apparatus 300 is configured to implement the functions of the network device in the method embodiment shown in FIG. 2, the processing unit 310 is further configured to determine the measurement configuration information based on the first information.

For more detailed descriptions of the processing unit 310 and the transceiver unit 320, refer to related descriptions in the method embodiment shown in FIG. 2.

As shown in FIG. 4, a communication apparatus 400 includes a processor 410 and an interface circuit 420. The processor 410 and the interface circuit 420 are coupled to each other. It may be understood that the interface circuit 420 may be a transceiver or an input/output interface. Optionally, the communication apparatus 400 may further include a memory 430, configured to store instructions to be executed by the processor 410, or store input data needed for running instructions by the processor 410, or store data generated after the processor 410 runs instructions.

When the communication apparatus 400 is configured to implement the method shown in FIG. 2, the processor 410 is configured to implement a function of the processing unit 310, and the interface circuit 420 is configured to implement a function of the transceiver unit 320.

When the communication apparatus is a chip used in a terminal, the chip in the terminal implements the functions of the terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the communication apparatus is a module used in a base station (in other words, a network device), the module in the base station implements the functions of the base station in the foregoing method embodiment. Th module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may alternatively exist in a base station or a terminal as discrete components.

All or some of the foregoing embodiments may be implemented by using software, hardware, firmware, or any combination thereof. When software is used for implementation, all or some of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, a computer, a server, or a data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or if there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A measurement report sending method, performed by a terminal device or a module used in a terminal device, and comprising:
determining a first signal quality threshold based on a height of the terminal device; and
sending a first measurement report when signal quality of a neighboring cell is higher than the first signal quality threshold, wherein the first measurement report comprises signal quality information of the neighboring cell.

2. The method according to claim 1, wherein the determining a first signal quality threshold based on a height of the terminal device comprises:
receiving measurement configuration information from a network device, wherein the measurement configuration information indicates a second signal quality threshold; and
determining the first signal quality threshold based on the height of the terminal device and the second signal quality threshold.

3. The method according to claim 1, wherein the determining a first signal quality threshold based on a height of the terminal device comprises:
receiving measurement configuration information from a network device, wherein the measurement configuration information indicates a correspondence between the height of the terminal device and the first signal quality threshold; and
determining the first signal quality threshold based on the height of the terminal device and the correspondence.

4. The method according to claim 3, wherein the correspondence comprises: when the height of the terminal device is greater than a first height threshold, the first signal quality threshold is a first value; or
the correspondence comprises: when the height of the terminal device is less than or equal to the first height threshold, the first signal quality threshold is a second value.

5. The method according to claim 3, wherein the correspondence comprises: when the height of the terminal device belongs to a height interval R(i), the first signal quality threshold is a value T(i), and any height in the height interval R(i) is greater than a height threshold H(i) and less than or equal to a height threshold H(i+1), wherein i is a positive integer.

6. The method according to claim 5, wherein the correspondence further comprises: when the height of the terminal device is greater than a height threshold H(N), the first signal quality threshold is a value T(N), wherein N is a positive integer greater than 1.

7. The method according to any one of claims 1 to 6, wherein the first measurement report further comprises height information of the terminal device.

8. A measurement report sending method, performed by a network device or a module used in a network device, comprising:
sending measurement configuration information to a terminal device, wherein the measurement configuration information indicates a correspondence between a height of the terminal device and a first signal quality threshold; and
receiving a first measurement report, wherein the first measurement report comprises signal quality information of a neighboring cell, and signal quality of the neighboring cell is higher than the first signal quality threshold.

9. The method according to claim 8, wherein the correspondence comprises: when the height of the terminal device is greater than a first height threshold, the first signal quality threshold is a first value; or
the correspondence comprises: when the height of the terminal device is less than or equal to the first height threshold, the first signal quality threshold is a second value.

10. The method according to claim 8, wherein the correspondence comprises: when the height of the terminal device belongs to a height interval R(i), the first signal quality threshold is T(i), and any height in the height interval R(i) is greater than a height threshold H(i) and less than or equal to a height threshold H(i+1), wherein i is a positive integer.

11. The method according to claim 10, wherein the correspondence further comprises: when the height of the terminal device is greater than a height threshold H(N), the first signal quality threshold is a value T(N), wherein N is a positive integer greater than 1.

12. The method according to any one of claims 8 to 11, wherein the first measurement report further comprises height information of the terminal device.

13. A communication apparatus, wherein the communication apparatus comprises at least one processor and a communication interface, the communication interface is used by the communication apparatus to exchange information with another communication apparatus, and when program instructions are executed in the at least one processor, the communication apparatus is enabled to perform the method according to any one of claims 1 to 7 or any one of claims 8 to 12.

14. A computer-readable storage medium, wherein the computer-readable medium stores program code to be executed by a device, and when the program instructions are executed, the method according to any one of claims 1 to 7 or any one of claims 8 to 12 is performed.
